# EUROPEAN PATENT SPECIFICATION

(11) **EP 0 674 128 B1**
(45) Date of publication and mention of the grant of the patent: **25.04.2001**
(21) Application number: 95102631.9
(22) Date of filing: 24.02.1995
(51) Int. Cl.: F16K 15/02, B60K 15/035

(54) **Backflow preventing combination for vehicle fuel tanks**
Rückflussverhinderungskombination für einen KFZ-Kraftstoffbehälter
Dispositif anti-retour pour réservoirs de véhicules automobiles

(30) Priority: 28.02.1994 IT TO940133
(43) Date of publication of application: 27.09.1995
(73) Proprietor: ERSI ITALIA S.p.A., 10071 Borgaro Torinese (Torino) (IT)
(72) Inventor: Lobascio, Osvaldo, I-10144 Torino (IT); Rocca, Andrea, I-10025 Pino Torinese (IT)
(74) Representative: Saconney, Piero

(56) References cited:
- GB-A- 983 076
- US-A- 2 554 053
- US-A- 4 643 222
- US-A- 5 044 389
- US-A- 5 282 497

## Description

The present invention relates to a backflow preventing combination for vehicle fuel tanks, comprising an upright portion of a filler pipe and a non-return valve enclosed within the said upright portion.

Prior art non-return valves are already known which comprise a tubular valve body fitted in the upright portion of the filler pipe, an internal annular valve seat facing the tank, and an obturator which is imprisoned in a portion of the tubular body between the seat and the end of the body nearer the tank so as to be freely slidable in the tubular body and capable of engaging the seat under the action of the fuel should this blow back up the filling pipe as a result of an excess of pressure in the tank.

In such known non-return valves, the obturator is constituted by a hollow ball made of plastics material contained in a cage.

This known design has two disadvantages.

A first disadvantage is that the ball tends to crack and fill with fuel, becoming heavier to a point at which the force exerted by fuel blowing back from the tank cannot raise it high enough to engage the valve seat.

Another disadvantage is that the hollow plastics balls are made by blow-moulding in a mould constituted by two halves which leave a seam around a meridian of the ball. When the seam engages the valve seat, the ball does not seal the valve satisfactorily. On the other hand, in a low-cost manufacturing process, it is not practical to eliminate this seam.

The object of the invention is to provide a backflow preventing combination of the type mentioned above which overcomes the two disadvantages described and is both easy to manufacture and cheaper than prior art valves.

This object is achieved according to the present invention by means of a backflow preventing combination according to Claim 1.

In a combination according to the invention, the obturator of the non-return valve is fundamentally different from a ball obturator in that, as it is open at the bottom, it is unable to retain liquid fuel. When a spurt of fuel reaches the obturator, this fuel floods the cavity in the obturator and exerts both a hydrostatic and a hydrodynamic upward thrust on it. This double thrust ensures that the valve closes effectively. When the blow-back of fuel stops, the fuel flows back into the tank.

As will be better understood from the description with reference to the drawings, a bell-shaped obturator according to the invention is suitable for moulding in two-half-moulds or dies, the junction of which is not in correspondence with the sealing surface which cooperates with the valve seat. Any seam left by the junction between the two dies will be in a region of the obturator which has no sealing function.

Document US-A-5 282 497 discloses a non-return valve for inhibiting over-filling of a vehicle fuel tank.

This known valve comprises a tubular valve body adapted to be fitted in a fuel tank at a lower terminal end of a filler pipe in such a position that the longitudinal axis of the valve body is substantially horizontal.

The valve body has an internal annular valve seat facing into the tank.

An obturator is imprisoned in a portion of the tubular valve body between the valve seat and the end of the body nearer the tank so as to be slidable in the valve body.

The tubular valve body contains a spring for normally biasing the obturator against the valve seat so as to define a "normally closed" position.

The obturator is constituted by a bell-shaped element which is open towards the tank and has a skirt spaced radially from the surrounding wall of the tubular body.

Additional characteristics and advantages of the invention will become apparent from the following detailed description of a preferred but non-limitative embodiment, illustrated in the appended drawings, in which:
Figure 1 is a partially sectioned elevation view of a fuel tank with a filling pipe incorporating a non-return valve;
Figure 2 is a longitudinal section of the non-return valve;
Figure 3 is an exploded perspective view of this valve, and
Figure 4 is an enlarged cross section along the plane indicated IV-IV in Figure 2.

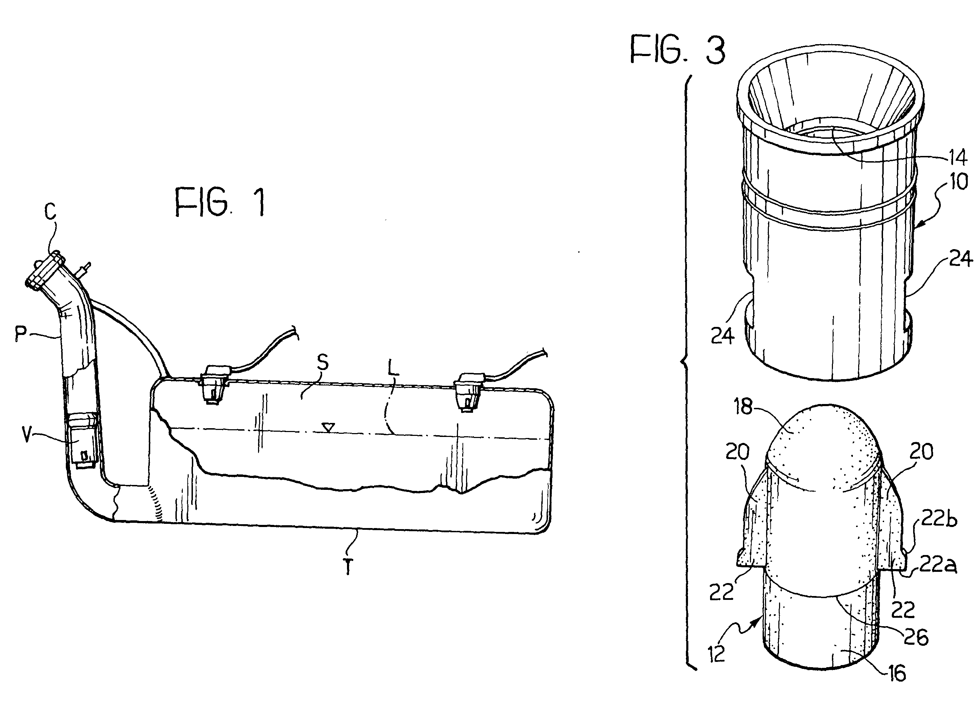

With reference to Figure 1, a fuel tank T (for petrol, diesel or the like) has a filler pipe P closed by a cap C. A non-return valve V is fitted in the filler pipe P. L indicates the level of fuel in the tank T while S indicates the space above the level L.

If the pressure in the space S rises above atmospheric pressure, for instance as a result of overheating due to the vehicle being stopped in the sun, this pressure tends to make the fuel rise up the pipe P. Should the cap C be removed under these conditions for refilling with fuel, in the absence of the non-return valve V, the fuel could overflow, even violently, from the mouth of the pipe P. The purpose of the non-return valve V is to prevent just such an occurrence by preventing the fuel from rising up the filler pipe P as a result of the high pressure in the space S but to allow the tank T to be filled in any case.

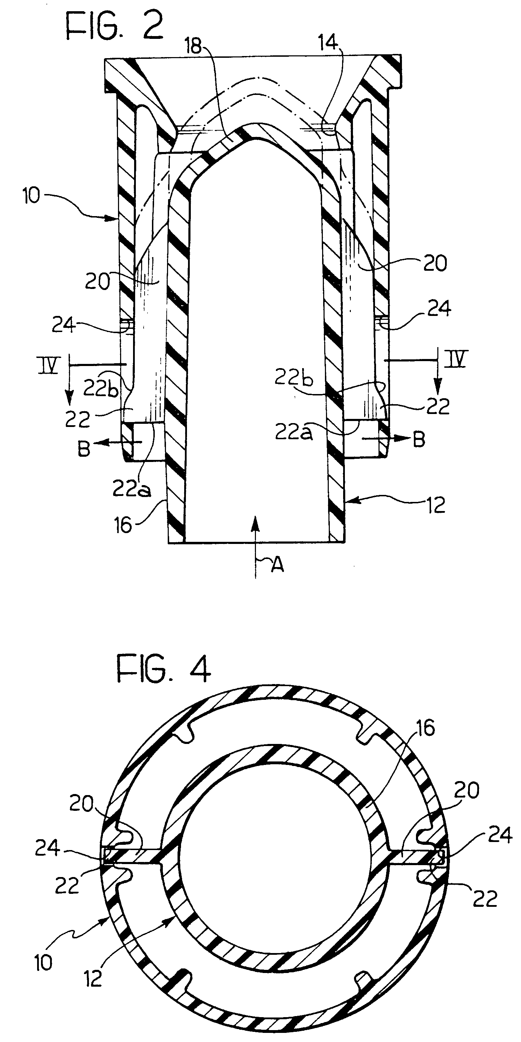

With reference to Figures 2 to 4, a non-return valve according to the invention comprises only two parts made of fuel-resistant plastics material, for example an acetal resin. One of these parts, indicated 10, is a tubular valve body which can be fitted in known manner into the filler pipe P of Figure 1. The other part, indicated 12, is an obturator.

The obturator 12 is imprisoned in the tubular body 10 in a way which will be clarified below.

The body 10 has an inner, essentially frusto-conical annular valve seat 14 (Figure 2) and is installed with the seat facing towards the tank.

The obturator 12, which will now be described, is imprisoned in a portion of the tubular body 10 between the seat 14 and the end of the body 10 which, when this is fitted in the vehicle, is the lowermost and faces into the tank.

As can be seen in Figures 2 and 3, the obturator 12 is constituted by a bell-shaped element opening towards the tank.

The skirt of the bell-shaped element 12 is indicated 16 and the end wall is indicated 18.

The outside of the skirt 16 has spacer ribs 20 which slidably engage the surrounding wall of the tubular body 10. The ribs 20 maintain the obturator 12 coaxially in, and spaced radially from the surrounding wall of the body 10 so as to allow fuel to flow into the tank during refuelling.

In order to facilitate the flow of fuel into the tank, the end wall 18 is, to advantage, ogival, as shown in the drawings.

The periphery of the ogival wall 18 defines an annular sealing surface shaped to cooperate with the annular seat 14.

In order to hold the obturator 12 slidably imprisoned in the tubular body 10, the ribs 20 have projections 22 of substantially saw-tooth profile in longitudinal section. This profile is defined by a straight edge 22a and a ramp edge 22b.

The straight edge 22a faces the open end of the skirt 16 and the height of the ramp edge 22b decreases from the end of the straight edge 22a towards the opposite end of the skirt 16.

Apertures 24 are formed in the peripheral wall of the tubular body 10 and the projections 22 are permanently engaged therein.

As a result of this, no additional parts are needed to hold the obturator in the valve body whereas, in the prior art ball valves, a third, cage element was needed to hold the ball in the valve body.

The two parts 10 and 12 constituting the valve are fitted together simply by the insertion of the obturator 12 into the body 10 in the direction of the arrow A of Figure 2 until the ramp edges 22b engage the open lower rim of the body 10. At this point, thanks to the resilience of the material forming the body 10, this rim expands in the direction of the arrows B of Figure 2 under the cam action of the inclined edges 22b until the projections 22 snap-engage the apertures 24.

Once they are snap engaged, the tubular body 10 and the obturator 12 are permanently interconnected, owing to the fact that the straight edges 22a of the projections 22 prevent the obturator 12 from being extracted from the fixed body since, when the valve is open, the straight edges 22a bear against the corresponding lower edges of the apertures 24.

When the non-return valve is hit by fuel blowing back from the tank, the fuel floods into the bell 12, urging it upwards with both hydrostatic and hydrodynamic thrust until it reaches the position, illustrated by the broken line in Figure 2, in which it closes the valve.

Once the blow-back ceases, the fuel flows out of the bell 12 which returns to its position in which the valve is open, as shown by the unbroken line of Figure 2.

A bell obturator like the one illustrated can be injection-moulded in two half-moulds or dies, the junction between which is remote from the sealing surface defined by the ogival portion 18. To advantage, the join is in the position indicated by the line 26 of Figure 3, thus forming a harmless seam. As can be seen, this line 26 is in the portion immediately below the projections 22 of the ribs 20.

## Claims

1. A *backflow preventing combination for vehicle fuel tanks*, comprising *an upright* portion of a filler pipe (P) for the tank (T) and a non-return valve (V) enclosed within said *upright* portion, the valve comprising a tubular valve body (10) fitted in the *upright* portion of the filler pipe (P) and having an internal annular valve seat (14) facing towards the first side of the filler pipe portion directed towards the tank (T) and an obturator (12) of plastics material imprisoned in a position of the tubular body (10) between the seat (14) and the end of the body (10) nearer the tank (T) so as to be freely slidable in the tubular body and capable of engaging the seat (14) under the action of the fuel when this rises up the filler pipe (P) as a result of an excess of pressure in the tank (T), wherein the obturator is constituted by a bell-shaped element (12) which is open towards the tank (T) and has a skirt (16) spaced radially from the surrounding wall of the tubular body (10) to allow fuel to flow into the tank (T) and having a sealing surface (18) facing the seat (14) and adapted to cooperate therewith.

2. A combination according to Claim 1, characterised in that the bell-shaped element (12) constituting the obturator has an ogival end wall (18) the periphery of which defines the said sealing surface.

3. A combination according to Claim 1 or Claim 2, characterised in that the skirt (16) of the bell-shaped element (12) has outer spacer ribs (20) which slidably engage the surrounding wall of the tubular body (10), apertures (24) being formed in this surrounding wall in correspondence with the ribs (20) and the ribs (20) having projections (22) which engage the apertures to prevent the bell-shaped element (12) from sliding out of the body (10).

4. A combination according to Claim 3, characterised in that the said projections (22) snap engage in the said apertures (24) as a result of resilient expansion of the tubular body (10).

5. A combination according to Claim 4, characterised in that the projections (22) are substantially saw-toothed in longitudinal profile, with a straight edge (22a) facing the open end of the skirt (16) and a ramp edge (22b) the height of which decreases from the top of the straight edge (22a) towards the opposite end of the skirt (16) so as to enable the bell-shaped obturator (12) to be snap engaged into the tubular body (10) by the force fitting of the projections (22) through the open end of the skirt (16) into positions in which the projections (22) are in the respective apertures (24).

## Patentansprüche

1. Rückschlagsperre für den Kraftstofftank von Fahrzeugen, wobei die Sperre einen aufragenden Teil eines Einfüllstutzens (P) für den Tank (T) sowie ein Rückschlagventil (V) enthält, das im aufragenden Teil eingeschlossen ist, wobei das Ventil einen rohrförmigen Ventilkörper (10), der im aufragenden Teil des Einfüllstutzens (P) sitzt und einen inneren, ringförmigen Ventilsitz (14) besitzt, der der ersten Seite jenes Teils des Einfüllstutzens gegenüberliegt, der zum Tank (T) gerichtet ist, sowie einen Verschluss (12) aus Kunststoff enthält, der an einer Stelle des rohrförmigen Körpers (10) zwischen dem Sitz (14) und jenem Ende des Körpers (10), das näher zum Tank (T) liegt, so eingeschlossen ist, dass er im rohrförmigen Körper frei gleiten und in den Sitz (14) unter der Wirkung von Kraftstoff eingreifen kann, wenn dieser im Einfüllstutzen (P) dadurch aufsteigt, dass im Tank (T) ein übermäßiger Druck herrscht, wobei der Verschluss von einem glockenförmigen Element (12) gebildet wird, das zum Tank (T) geöffnet ist und einen Hals (16) besitzt, der von der Mantelfläche des rohrförmigen Körpers (10) radial beabstandet ist, damit Kraftstoff in den Tank (T) fließen kann, und eine Abdichtungsfläche (18) besitzt, die dem Sitz (14) gegenüberliegt und so aufgebaut ist, um mit diesem zusammenzuwirken.

2. Sperre gemäß Anspruch 1, dadurch gekennzeichnet, dass das glockenförmige Element (12), das den Verschluss bildet, eine gewölbeartige Stirnwand (18) besitzt, deren Umfang die Abdichtungsfläche bildet.

3. Sperre gemäß Anspruch 1 oder Anspruch 2, dadurch gekennzeichnet, dass der Hals (16) des glockenförmigen Elements (12) äußere Abstandsrippen (20) besitzt, die in die Mantelfläche des rohrförmigen Körpers (10) verschiebbar eingreifen, wobei Öffnungen (24) in dieser Mantelfläche in Übereinstimmung mit den Rippen (20) ausgebildet sind und die Rippen (20) Vorsprünge (22) besitzen, die in die Öffnungen eingreifen, um zu verhindern, dass das glockenförmige Element (12) aus dem Körper (10) gleitet.

4. Sperre gemäß Anspruch 3, dadurch gekennzeichnet, dass die Vorsprünge (22) in die Öffnungen (24) durch eine elastische Ausdehnung des rohrförmigen Körpers (10) einschnappen.

5. Sperre gemäß Anspruch 4, dadurch gekennzeichnet, dass die Vorsprünge (22) im Längsprofil im Wesentlichen sägezahnartig ausgebildet sind, mit einer geraden Kante (22a), die dem offenen Ende des Halses (16) gegenüberliegt, und einer rampenförmigen Kante (22b), deren Höhe vom Oberteil der geraden Kante (22a) zum gegenüberliegenden Ende des Halses (16) abnimmt, um den glockenförmigen Verschluss (12) in den rohrförmigen Körper (10) dadurch einschnappen zu können, dass die Vorsprünge (22) durch das offene Ende des Halses (16) zwangsweise an Stellen eingesetzt werden, an denen sich die Vorsprünge (22) in den entsprechenden Öffnungen (24) befinden.

## Revendications

1. Combinaison empêchant un écoulement vers l'arrière pour des réservoirs de carburant de véhicules automobiles, comportant une partie verticale d'un tuyau de remplissage (P) du réservoir (T), et un clapet anti-retour (V) enfermé à l'intérieur de ladite partie verticale, le clapet comportant un corps de clapet tubulaire (10) agencé dans la partie verticale du tuyau de remplissage (P), et ayant un siège de clapet annulaire intérieur (14) dirigé en direction du premier côté de la partie du tuyau de remplissage dirigée vers le réservoir (T), et un obturateur (12) constitué de matière plastique retenu dans une position du corps tubulaire (10) située entre le siège (14) et l'extrémité du corps (10) plus proche du réservoir (T), de manière à pouvoir coulisser librement dans le corps tubulaire, et à pouvoir venir au contact du siège (14) sous l'action du carburant lorsque celui-ci monte dans le tuyau de remplissage (P) en raison d'un excès de pression dans le réservoir (T), dans lequel l'obturateur est constitué d'un élément en forme de cloche (12) qui est ouverte en direction du réservoir (T), et a une jupe (16) éloignée radialement de la paroi entourante du corps tubulaire (10) pour permettre à du carburant de s'écouler dans le réservoir (T), et ayant une surface d'étanchéité (18) dirigée vers le siège (14), et adaptée pour coopérer avec celui-ci.

2. Combinaison selon la revendication 1,
caractérisée en ce que l'élément en forme de cloche (12) constituant l'obturateur a une paroi d'extrémité ogivale (18) dont la périphérie définit ladite surface d'étanchéité.

3. Combinaison selon la revendication 1 ou 2,
caractérisée en ce que la jupe (16) de l'élément en forme de cloche (12) a des nervures extérieures formant espaceur (20) qui viennent en contact de manière coulissante avec la paroi entourante du corps tubulaire (10), les ouvertures (24) étant formées dans cette paroi entourante en correspondance avec les nervures (20), et les nervures (20) ayant des saillies (22) qui viennent en prise avec les ouvertures afin d'empêcher l'élément en forme de cloche (12) de coulisser à l'extérieur du corps (10).

4. Combinaison selon la revendication 3,
caractérisée en ce que lesdites saillies (22) viennent en prise de manière encliquetable dans lesdites ouvertures (24) en résultat d'un agrandissement élastique du corps tubulaire (10).

5. Combinaison selon la revendication 4,
caractérisée en ce que les saillies (22) ont un profil longitudinal sensiblement en forme de dent de scie, ayant un bord droit (22a) dirigé vers l'extrémité ouverte de la jupe (16), et un bord formant rampe (22b) dont la hauteur diminue à partir de la partie supérieure du bord droit (22a) en direction de l'extrémité opposée de la jupe (16), de manière à permettre à l'obturateur en forme de cloche (12) de venir en prise de manière encliquetable dans le corps tubulaire (10) par le montage à force des saillies (22) à travers l'extrémité ouverte de la jupe (16) jusqu'à des positions dans lesquelles les saillies (22) sont dans les ouvertures respectives (24).
